# EUROPEAN PATENT SPECIFICATION

(11) **EP 2 685 378 B1**
(45) Date of publication and mention of the grant of the patent: **29.06.2016**
(21) Application number: 12175929.4
(22) Date of filing: 11.07.2012
(51) Int. Cl.: G06F 1/30

(54) **Automotive electrical component unit**
Elektrische Bauteileinheit eines Kraftfahrzeugs
Unité de composant électrique de véhicule

(43) Date of publication of application: 15.01.2014
(73) Proprietor: Rohm Co., Ltd., Kyoto-shi, Kyoto 615-8585 (JP)
(72) Inventor: Masago, Noriyuki, 47877 Willich (DE)
(74) Representative: Isarpatent

(56) References cited:
- DE-A1- 10 223 880
- DE-A1-102006 013 381
- US-A1- 2009 183 018

## Description

The invention relates to an automotive electrical component unit, ECU, in particular to an automotive electrical component unit ECU having an integrated supervisory circuit adapted to supervise a power supply regulator of the automotive electrical component unit, ECU.

US 2009/183018 A1 describes an electrical control unit which comprises a main microcomputer and a sub-microcomputer. The electrical control unit further comprises a power supply circuit for providing power to the main microcomputer and to the sub-microcomputer. The power supply circuit contains a regulator. A CPU of the main microcomputer decides whether the sub-microcomputer has been brought into an abnormal state. The sub-microcomputer is monitored by the main microcomputer. The first power supply unit supplies, via a first power supply line, a power supply voltage to the main microcomputer to activate the main microcomputer. A second power supply unit supplies, via a second supply line different from the first supply line, a power supply voltage to the sub-microcomputer to activate the sub-microcomputer. The main microcomputer includes determining means for determining whether or not the sub-microcomputer should be made to operate as well as a switching means for performing a switchover between output and non-output of a power control signal to the second power supply unit based on results of the determining means, whereby the power supply of the sub-microcomputer is controlled.

Vehicles such as cars can comprise a plurality of electrical component units controlling different functions and automotive devices deployed within the vehicle. These functions can for instance be a controlling of a window panel movement within a car door or controlling of an airbag device or other devices such as mirrors or windscreen wipers of the vehicle. Safety is a key issue for any automotive device within a vehicle. With increasing technological complexity there is an increasing risk that systematic failures or random hardware failures can occur within the system. Electrical component units ECUs can comprise microcontrollers which are provided to control actuators on the basis of data or signals received from sensors. A microcontroller or a main control unit MCU of an automotive electrical component unit, ECU, needs for its operation a power supply which is provided by a power supply regulator of the electrical component unit. Power supply regulators can incorporate also an overcurrent protection functionality or an overvoltage protection functionality to provide a functional safety of the electrical component unit ECU. Further, in conventional systems it may happen that a power supply regulator for a microcontroller is also causing a disturbed power supply for the microcontroller or even an interruption of the power supply for the microcontroller. The disturbed unregular power supply for the microcontroller may have as a consequence that the microcontroller performs an erroneous control of some automotive devices within the car or vehicle causing a safety problem.

Accordingly, it is an object of the present invention to provide an operational or functional safety of an automotive electrical component unit, even if the power supply for the microcontroller is disturbed.

This object is achieved by an automotive electrical component unit comprising the features of claim 1.

Possible embodiments of the automotive electrical component unit are indicated in the subclaims.

In the following a possible embodiment of the automotive electrical component unit, ECU, according to the present invention is described in more detail with reference to the embodiment shown in the enclosed figure.

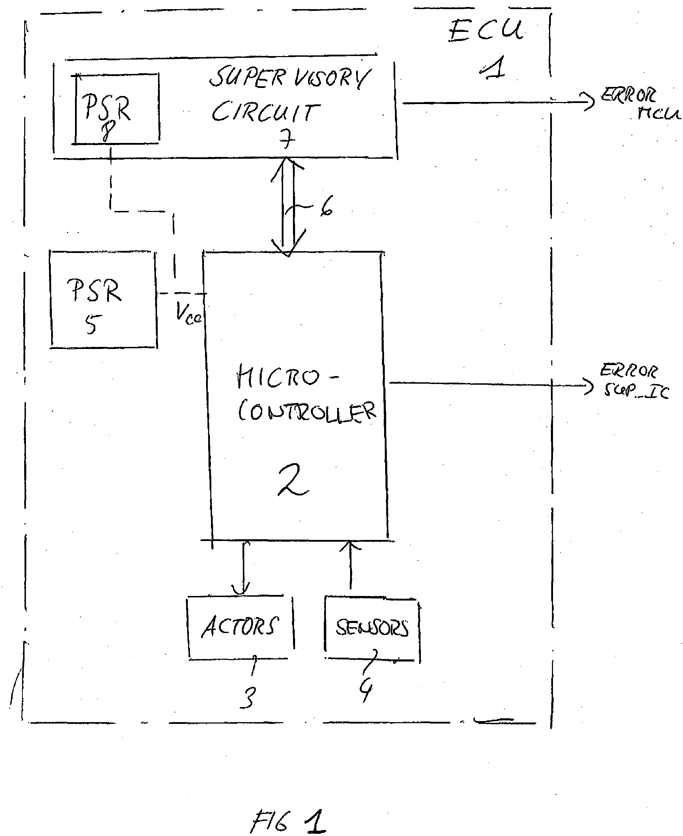

Fig. 1 shows a block diagram of a possible embodiment of an electrical component unit according to the present invention.

As can be seen in the figure the electrical component unit, ECU 1, comprises a microcontroller 2 which is adapted to control actuators 3 to perform automotive functions on the basis of data received from sensors deployed within the vehicle. The microcontroller is adapted to output control signals to control automotive devices within the vehicle to perform automotive functions such as controlling the movement of a window panel or adjusting a mirror of the vehicle.

The microcontroller MCU 2 can be formed by a small computer on a single integrated circuit consisting internally of a central processing unit CPU, a clock generation circuit, timers, peripherals, I/O ports and memories. It can comprise an internal programmable memory in the form of a non-volatile memory such as a flash memory as well as a data memory formed for instance by a RAM. The microcontroller 2 needs for its operation a power supply voltage VCC as shown in the enclosed figure. This power supply VCC is supplied to the microcontroller 2 by a power supply regulator 5 of the electrical component unit 1.

The microcontroller 2 is further connected to a bidirectional communication interface 6 of the power supply supervisory circuit 7 of the electrical component unit 1. The power supply supervisory circuit 7 is adapted to supervise the power supply regulator 5 and switches a power supply of the microcontroller 2 to an integrated power supply regulator 8 integrated in said supervisory circuit 7 if the supervised power supply regulator 5 has a malfunction. Accordingly, the power supply supervisory circuit 7 monitors continuously whether the power supply regulator 5 has a malfunction. This can be performed by the supervisory circuit 7 directly or indirectly. In a possible implementation the power supply supervisory circuit 7 can be connected to the power supply regulator 5 via a communication interface to monitor the power supply regulator 5 separately from the microcontroller 2. In another embodiment the power supply supervisory circuit 7 can monitor the behaviour of shown by the microcontroller 2 if a power supply voltage VCC changes a possible malfunction of the power supply regulator 5. In a further implementation the integrated power supply supervisory circuit 7 may comprise a voltage sensor to monitor the power supply voltage VCC of the microcontroller 2 directly. In case that the power supply microcontroller VCC is outside a predetermined voltage range the integrated power supply supervisory circuit 7 detects that the power supply regulator 5 of the microcontroller 2 has a malfunction and performs a switch-over to the integrated power supply regulator 8 integrated in the power supply supervisory circuit 7 as shown in the enclosed figure.

In a possible embodiment the integrated supervisory circuit 7 performs a mutual supervision with the microcontroller 2 of the electrical component unit 1 through the communication interface 6 connecting the supervisory circuit 7 with the microcontroller 2. The bidirectional communication interface 6 can comprise a bus exchanging signals between the microcontroller 2 and the power supply supervisory circuit 7. In a possible embodiment the integrated supervisory circuit 7 is adapted to notify the microcontroller 2 via the communication interface 6 if the integrated power supply circuit 7 detects a malfunction of the supervised power supply regulator 5 provided for the respective microcontroller 2. In this embodiment the microcontroller 2 notifies that its power supply regulator 5 has a malfunction and can perform in a possible implementation a switch-over to the integrated power supply regulator 8 of its corresponding power supply supervisory circuit 7 itself. Accordingly, in one embodiment the switch-over is controlled by a power supply supervisory circuit 7 whereas in an alternative embodiment the switch-over of the power supply regulator 5 to the integrated power supply regulator 8 is performed under the control of the microcontroller 2. In a further embodiment in case of a severe malfunction of the power supply regulator 5 causing for instance a complete drop of the power supply voltage VCC for the microcontroller 2 a switch-over to the integrated power supply regulator 8 can be performed under the control of the power supply supervisory circuit 7. In a less severe situation where the malfunction of the power supply regulator 5 causes irregularities of the power supply voltage and not a complete drop of the power supply voltage VCC the switch-over can still be performed by the microcontroller 2.

The integrated supervisory circuit 7 of the microcontroller 2 is connected to each other by the communication interface 6 and are adapted to perform a mutual supervision by means of monitoring signals exchanged via the communication interface 6. In this way it is also possible for the microcontroller 2 to detect a malfunction of its power supply supervisory circuit 7 and to act accordingly. If the microcontroller 2 detects that the power supply supervisory circuit 7 has a malfunction the microcontroller 2 is adapted to generate an error signal ERROR SUP_IC which can be output to a higher software layer as shown in the enclosed figure. If the supervisory circuit 7 has a severe malfunction the microcontroller 2 can still operate and control automotive devices and because of the danger of imminent safety relevant functions send and a corresponding warning to the driver of the vehicle.

The integrated supervisory circuit 7 of the electrical component unit 1 is adapted to output an error signal if a monitored operating parameter of the supervised microcontroller 2 is not within a predetermined specification range. Moreover, the integrated supervisory circuit 7 is also adapted to output an error signal if a monitored operating parameter of the supervised power supply regulator 5 is not within a predetermined specification range. With the electrical component unit 1 according to the present invention as shown in the enclosed figure an overall system functionality is increased. The electrical component unit 1 specifically complies with safety standard ISO 26262. The integrated supervisory circuit 7 supervises the power supply regulator 5 of the microcontroller 2 and has an integrated power supply regulator 8 which can be activated if the power supply regulator 5 used by the microcontroller 2 in the normal operation mode has a malfunction or breaks down. In this way the functional safety of the electrical component unit 1 is safeguarded. If the power supply regulator of the automotive electrical component unit ECU 1 breaks down the functionality of the electrical component unit 1 is maintained. Accordingly, the functional safety of the automotive electrical component unit 1 is improved.

## Claims

1. An automotive electrical component unit (1) comprising at least one microcontroller (2) supplied with an electrical power provided by a power supply regulator (5) of said automotive electrical component unit (1), wherein the at least one microcontroller (2) is adapted to control at least one function of an automotive device within a vehicle, and comprising
an integrated power supply supervisory circuit (7) adapted to supervise said power supply regulator (5) of said electrical component unit (1),
**characterized in that**
said integrated power supply supervisory circuit (7) comprises a voltage sensor to monitor a power supply voltage (V_{CC}) of the microcontroller (2),
wherein in case that the power supply voltage (V_{CC}) is outside a predetermined range the integrated power supply supervisory circuit (7) detects that the power supply regulator (5) of the microcontroller (2) has a malfunction and performs a switch-over to an integrated power supply regulator (8) integrated in said power supply supervisory circuit (7) integrated in said automotive electrical component unit (1).

2. The automotive electrical component unit (1) according to claim 1,
wherein said integrated power supply supervisory circuit (7) and said microcontroller (2) of said electrical component unit (1) are connected to each other by a communication interface (6) and are adapted to perform a mutual supervision by means of monitoring signals exchanged via said communication interface (6).

3. The automotive electrical component unit (1) according to claims 1 or 2,
wherein said microcontroller (2) of said electrical component unit (1) is adapted to generate an error signal (ERROR_{SUP_IC}) if the microcontroller (2) detects a malfunction of the corresponding integrated power supply supervisory circuit (7).

4. The automotive electrical component unit (1) according to one of the preceding claims 1 to 3,
wherein said integrated power supply supervisory circuit (7) of said electrical component unit (1) is adapted to output an error signal (ERROR_MCU) if a monitored operating parameter of the supervised microcontroller (2) and/or supervised power supply regulator (5) is not within a predetermined specification range.

5. The automotive electrical component unit (1) according to one of the preceding claims 1 to 4,
wherein said automotive electrical component unit (1) is an electrical power steering, EPS, device,
an ABS device,
an airbag control device,
a window screen wiper control device,
a window panel control device,
a mirror adjustment control device, and/or
a door lock control device.

## Patentansprüche

1. Elektrische Bauteileinheit (1) eines Kraftfahrzeugs, die mindestens einen Mikrocontroller (2) umfasst, der mit einer elektrischen Leistung versorgt wird, die durch einen Stromversorgungsregler (5) der elektrischen Bauteileinheit (1) eines Kraftfahrzeugs bereitgestellt wird, wobei der mindestens eine Mikrocontroller (2) dazu eingerichtet ist, mindestens eine Funktion einer Kraftfahrzeugvorrichtung innerhalb eines Fahrzeugs zu steuern, und einen integrierten Stromversorgungsüberwachungskreis (7) umfasst, der dazu eingerichtet ist, den Stromversorgungsregler (5) der elektrischen Bauteileinheit (1) zu überwachen,
**dadurch gekennzeichnet, dass**
der integrierte Stromversorgungsüberwachungskreis (7) einen Spannungssensor umfasst, um eine Versorgungsspannung (V_{CC}) des Mikrocontrollers (2) zu kontrollieren,
wobei für den Fall, dass die Versorgungsspannung (V_{CC}) außerhalb eines vorgegebenen Bereichs liegt, der integrierte Stromversorgungsüberwachungskreis (7) detektiert, dass der Stromversorgungsregler (5) des Mikrocontrollers (2) eine Funktionsstörung hat, und eine Umschaltung zu einem integrierten Stromversorgungsregler (8) ausführt, der in den Stromversorgungsüberwachungskreis (7) integriert ist, der in die elektrische Bauteileinheit (1) eines Kraftfahrzeugs integriert ist.

2. Elektrische Bauteileinheit (1) eines Kraftfahrzeugs nach Anspruch 1,
wobei der integrierte Stromversorgungsüberwachungskreis (7) und der Mikrocontroller (2) der elektrischen Bauteileinheit (1) durch eine Kommunikationsschnittstelle (6) miteinander verbunden sind und dazu eingerichtet sind, eine gegenseitige Überwachung mit Hilfe von Kontrollsignalen auszuführen, die über die Kommunikationsschnittstelle (6) ausgetauscht werden.

3. Elektrische Bauteileinheit (1) eines Kraftfahrzeugs nach den Ansprüchen 1 oder 2,
wobei der Mikrocontroller (2) der elektrischen Bauteileinheit (1) dazu eingerichtet ist, ein Fehlersignal (ERROR_{SUP_IC}) zu generieren, wenn der Mikrocontroller (2) eine Funktionsstörung des entsprechenden integrierten Stromversorgungsüberwachungskreises (7) detektiert.

4. Elektrische Bauteileinheit (1) eines Kraftfahrzeugs nach einem der vorangehenden Ansprüche 1 bis 3,
wobei der integrierte Stromversorgungsüberwachungskreis (7) der elektrischen Bauteileinheit (1) dazu eingerichtet ist, ein Fehlersignal (ERROR_MCU) auszugeben, wenn ein kontrollierter Betriebsparameter des überwachten Mikrocontrollers (2) und/oder des überwachten Stromversorgungsreglers (5) nicht innerhalb eines vorgegebenen Spezifikationsbereichs liegt.

5. Elektrische Bauteileinheit (1) eines Kraftfahrzeugs nach einem der vorangehenden Ansprüche 1 bis 4,
wobei die elektrische Bauteileinheit (1) eines Kraftfahrzeugs eine elektrische Lenkhilfenvorrichtung (Electrical Power Steering, EPS), eine ABS-Vorrichtung, eine Airbag-Steuerungsvorrichtung, eine Scheibenwischer-Steuerungsvorrichtung, eine Fensterscheiben-Steuerungsvorrichtung, eine Spiegelverstell-Steuerungsvorrichtung, und/oder eine Türverriegelungs-Steuerungsvorrichtung ist.

## Revendications

1. Unité de composant électrique automobile (1) comprenant au moins un microcontrôleur (2) alimenté par une puissance électrique fournie par un régulateur d'alimentation électrique (5) de ladite unité de composant électrique automobile (1), dans lequel ledit au moins un microcontrôleur (2) est conçu pour commander au moins une fonction d'un dispositif automobile dans un véhicule, et comprenant
un circuit de surveillance d'alimentation électrique intégré (7) conçu pour surveiller ledit régulateur d'alimentation électrique (5) de ladite unité de composant électrique (1),
**caractérisée en ce que**
ledit circuit de surveillance d'alimentation électrique intégré (7) comprend un détecteur de tension pour surveiller une tension d'alimentation (V_{CC}) du microcontrôleur (2),
dans laquelle, dans le cas où la tension d'alimentation (V_{CC}) se situe en dehors d'une plage prédéterminée, le circuit de surveillance d'alimentation électrique intégré (7) détecte que le régulateur d'alimentation électrique (5) du microcontrôleur (2) présente un défaut de fonctionnement et effectue une commutation sur un régulateur d'alimentation électrique intégré (8) intégré dans ledit circuit intégré de surveillance d'alimentation électrique (7) intégré dans ladite unité de composant électrique automobile (1).

2. Unité de composant électrique automobile (1) selon la revendication 1,
dans laquelle ledit circuit de surveillance d'alimentation électrique intégré (7) et ledit microcontrôleur (2) de ladite unité de composant électrique (1) sont reliés l'un à l'autre par une interface de communication (6) et sont conçus pour effectuer une surveillance mutuelle au moyen de signaux de surveillance échangés par l'intermédiaire de ladite interface de communication (6).

3. Unité de composant électrique automobile (1) selon la revendication 1 ou 2,
dans laquelle ledit microcontrôleur (2) de ladite unité de composant électrique (1) est conçu pour générer un signal d'erreur (ERROR_{SUP_IC}) si le microcontrôleur (2) détecte un défaut de fonctionnement du circuit de surveillance d'alimentation électrique intégré (7) correspondant.

4. Unité de composant électrique automobile (1) selon l'une des revendications précédentes 1 à 3,
dans laquelle ledit circuit de surveillance d'alimentation électrique intégré (7) de ladite unité de composant électrique (1) est conçu pour délivrer un signal d'erreur (ERREUR_MCU) si un paramètre de fonctionnement surveillé du microcontrôleur surveillé (2) et/ou du régulateur d'alimentation électrique surveillé (5) ne se situe pas dans une plage de spécification prédéterminée.

5. Unité de composant électrique automobile (1) selon l'une des revendications précédentes 1 à 4,
dans laquelle ladite unité de composant électrique automobile (1) est
un dispositif de direction assistée électrique, EPS,
un dispositif ABS,
un dispositif de commande de coussin de sécurité gonflable,
un dispositif de commande d'essuie-glace de pare-brise,
un dispositif de commande de vitrage,
un dispositif de commande de réglage de rétroviseur, et/ou un dispositif de commande de verrouillage de portière.
